# EUROPEAN PATENT APPLICATION

(11) **EP 2 091 218 A1**
(43) Date of publication of application: **19.08.2009**
(21) Application number: 08445008.9
(22) Date of filing: 15.02.2008
(51) Int. Cl.: H04M 1/725

(54) **System and device for use with separated wireless interface and user interface**

(71) Applicant: Laird Technologies AB, 164 22 Kista (SE)
(72) Inventor: Savela, Reino, 162 55 Vällingby (SE)
(74) Representative: Petersson, Hans Göran

(57) **Abstract**

It is presented a slave device comprising: a first wireless communication means; master communication means, for receiving control signals from a master device, and transmitting and receiving payload data to or from master device, master device being separate from slave device; and attachment means for attaching, directly or indirectly, slave device to a person. The slave device is configured to be controlled mainly using control signals from master device. A corresponding system is also presented.

## Description

### Field Of Invention

The present invention relates generally to wireless communication devices and in particular to systems and devices for use with separated wireless interface and user interface.

### Background

Mobile communication terminal manufacturers are under constant pressure to improve the appearance of their products. Not only is there a demand for smaller mobile terminals, but also mobile terminals designed in unique and fashionable form factors. Each physical modification results in a number of new technical design requirements. For example, antennas have to be customized to meet space requirements and interaction with surrounding components. This antenna customisation is costly and time consuming, and because of the increased miniaturization requirements the resulting antenna is often a compromise between performance and size. Consequently, there is a need for an improved configuration of components of mobile communication terminals.

US6,882,870 discloses a mobile communication device constructed for use in communicating with a wireless communications network. The device is adapted for carrying on or near the person of the user. For ease of use and adaptability, the various functions of the device are separated into multiple units. The units communicate with each other through a localized communication system in which at least one local traffic channel is generated by the primary unit. To permit bidirectional communication among the units, multiple access protocols are used, either TDMA or CDMA.

Nevertheless, a drawback of separating the radio part from the user interface is that the user has to carry a separate radio part with her in order to be able to use the communication device.

### Summary

In view of the above, an objective of the present invention is to minimize the drawbacks followed from the separation of the radio part and the user interface. Generally, the above objectives are achieved by the attached independent patent claims.

According to a first aspect of the present invention there has been provided a slave device comprising:
a first wireless communication means;
master communication means, for receiving control signals from a master device, and transmitting and receiving payload data to or from the master device, the master device being separate from the slave device; and
attachment means for attaching, directly or indirectly, the slave device to a person;
wherein the slave device is configured to be controlled mainly using control signals from the master device.

By providing attachment means for attaching the slave device to a person, the risk of losing the slave device is reduced.

The slave device may be configured to be controlled only using the control signals from the master device.

The slave device may further comprise at least one reader for a subscriber identity module.

One of the at least one reader for a subscriber identity module may be associated with a plurality of wireless communication means.

The attachment means may comprise an integration of the slave device with another item.

The attachment means may comprise an integration with an item selected from the group consisting of a bracelet, a necklace, a wristwatch, a toupee, spectacles, a belt buckle, and an artificial limb, or any combination of these items.

The attachment means may comprise implanting means.

The first wireless communication means may be configured for communicating with a mobile telecommunication network; and the slave device may further comprise a second wireless communication means for receiving signals of a second wireless application, the second wireless communication means being distinct from the first wireless communication means. This provides excellent versatility, by providing access to a mobile telecommunication network and at least a second wireless application in the slave device. For example, several master devices could thus be connected to one slave device. The plurality of wireless applications also allows a single master device to gain access to a plurality of wireless applications, giving the user an excellent choice of services without the need to include all antennas and transceivers/receivers in the master device. The invention as claimed also provides excellent upgradeability. Since both the slave device and master device can be upgraded independently, this gives a user more options at a lower cost than would otherwise be possible. For instance, the master device may be replaced to satisfy aesthetic desires, or the slave device may be replaced to support one or more new wireless applications.

The second wireless application may be an application selected from the group consisting of satellite based positioning, frequency modulated radio audio broadcasting, amplitude modulated radio audio broadcasting, digital audio broadcasting, radio based mobile television, satellite based mobile television, wireless local area network, and wireless metropolitan area network, or any combination of these applications.

The slave device may further comprise a third wireless communication means for receiving signals for a third wireless application.

A second aspect of the present invention is a system comprising:
a slave device and at least one master device, the at least one master device being separate from the slave device,
wherein the slave device comprises:
a first wireless communication means;
master communication means, for receiving control signals from at the least one master device, and transmitting and receiving payload data to or from the at least one master device; and
attachment means for attaching, directly or indirectly, the slave device to a person;
and each one of the at least one master device comprises:
slave communication means, for sending control signals to the slave device and receiving and transmitting payload data from or to the slave device;
user input means; and
user output means;
wherein the slave device is configured to be controlled mainly using the control signals from the at least one master device.

The attachment means may comprise an integration of slave device with another item.

The attachment means may comprise an integration with an item selected from the group consisting of a bracelet, a necklace, a wristwatch, a toupee, spectacles, a belt buckle, and an artificial limb, or any combination of these items.

The attachment means may comprise implanting means.

The slave device may be configured to be controlled only using the control signals from the at least one master device.

The slave communication means may be the only wireless communication means of the master communication means.

The slave device may further comprise at least one reader for a subscriber identity module.

One of the at least one reader for a subscriber identity module may be associated with a plurality of wireless communication means.

It is to be noted that, where appropriate, any feature of the first aspect may be applied to the second aspect, and any feature of the second aspect may be applied to the first aspect.

Other objectives, features and advantages of the present invention will appear from the following detailed description, from the appended dependent claims as well as from the drawings.

Generally, all terms used in the claims are to be interpreted according to their ordinary meaning in the technical field, unless explicitly defined otherwise herein. All references to "a/an/the element, device, component, means, step, etc" are to be interpreted openly as referring to at least one instance of the element, device, component, means, step, etc., unless explicitly stated otherwise. The steps of any method disclosed herein do not have to be performed in the exact order disclosed, unless explicitly stated.

### Brief Description Of Drawings

The invention is now described, by way of example, with reference to the accompanying drawings, in which:
Fig 1 is a schematic illustration of a system according to an embodiment of the present invention, and an environment in which this system may be applied,
Fig 2 is a schematic illustration of internal components of the slave device of Fig 1,
Fig 3 is a schematic illustration of internal components of the master device of Fig 1,
Fig 4a shows the master device of Fig 3 embodied in a phone UI device for use with mobile communication, and
Fig 4b shows the master device of Fig 3 embodied in a navigation UI device.

### Detailed Description Of Preferred Embodiments

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

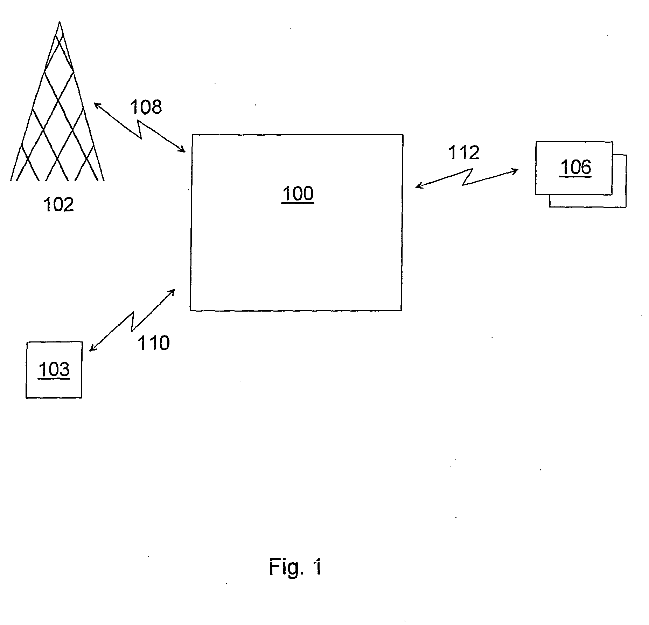

Fig 1 is a schematic illustration of a system according to an embodiment of the present invention, and an environment in which this system may be applied. A slave device 100, which will described in more detail below, is responsible for communication 108 with a base station 102 of a mobile telecommunication network. The mobile telecommunication network is known per se, and can be any current or future standard, e.g. GSM, UMTS, D-AMPS, CDMA2000, FOMA, TD-SCDMA, LTE and HSOPA.

Furthermore, the slave device 100 is capable of receiving signals 110 of at least one other wireless application, from a transmitter 103. The other wireless application can be any useful radio or satellite based application. One example of the other wireless application is satellite based positioning services, such as global positioning system (GPS) or Galileo. In this example, the signal is received from satellite transmitters. Another example of the other wireless application is conventional radio broadcasts, such as FM radio or AM radio or digital radio broadcasts such as digital audio broadcasting (DAB). Another example of the other wireless application is radio and/or satellite based mobile television, such as digital video broadcasting - handheld devices (DVB-H), digital video broadcasting - satellite services to handheld devices (DVB-SH), digital multimedia broadcasting (DMB), satellite digital multimedia broadcast (S-DMB), Terrestrial Digital Multimedia Broadcast (T-DMB), China mobile multimedia broadcasting (CMMB), MediaFLO, digital radio mondiale (DRM), or Integrated Service Digital Broadcasting (ISDB-T). Another example of the other wireless application is wireless local area network, such as any of the IEEE 802.11 standards, also known as WI-FI. Another example of the other wireless application is a wireless metropolitan area network, such as any of the IEEE 802.16 standards, also known as worldwide interoperability for microwave access (WIMAX). Another example of the other wireless application is local wireless communication, such as Bluetooth or wireless universal serial bus (Wireless USB).

The slave device 100 is also connected to a master device 106 over a local interface 112. The local interface can be wireless, for example using Bluetooth, wireless universal serial bus (Wireless USB), or any of the IEEE 802.11 standards, or the local interface can be wire-based for example using universal serial bus, a serial connection (e.g. RS-232), a parallel connection (e.g. Centronics) or any other suitable local connection.

The master device 106, which will be described in more detail below, controls the slave device 100 to obtain access to a plurality of wireless services, such as the mobile telecommunication network and the at least one other wireless application. The master device 106 interacts with the user, and thus both receives inputs and provides outputs to the user. As is indicated in Fig 1, a plurality of master devices 106 can be connected to one slave device 100. For example, a phone UI (user interface) device can be connected to the slave device 100 to gain access to the mobile telecommunication network, while a navigation UI device can be connected to the slave device 100 to gain access to GPS co-ordinates.

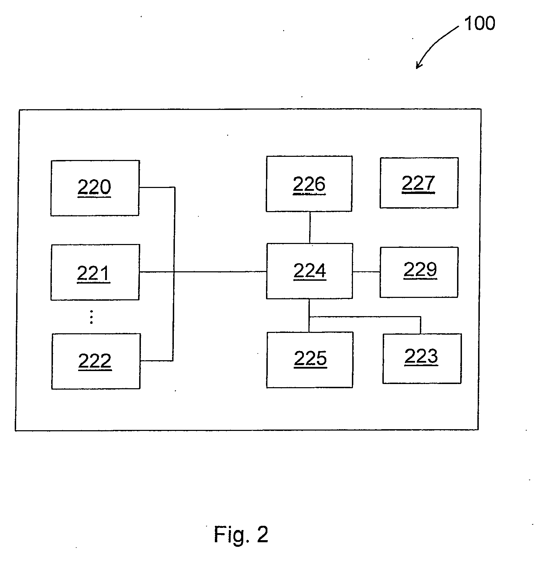

Fig 2 is a schematic illustration of internal components of the slave device 100 of Fig 1. The slave device 100 is responsible for interfacing with a plurality of wireless applications and as such can comprise a plurality of wireless interfaces 220, 221, 222, where each wireless interface is suitable for one or more wireless applications, such as the wireless applications put forth in conjunction with Fig 1 above. The slave device 100 is capable of utilising any number of different wireless applications, not necessarily only two applications as illustrated in Fig 1 as illustrated by the three wireless interfaces 220, 221, 222, and the three dots between the wireless interfaces 221 and 222. Each wireless interface includes an antenna and circuitry. As is well known to a person skilled in the art, the circuitry comprises a suitable combination of analogue and digital electronic components, together forming a radio receiver, a satellite receiver, radio transmitter and/or satellite transmitter. These components can include, inter alia, band pass filters, amplifiers, mixers, local oscillators, low pass filters, AD/DA converters, etc. If suitable, multiple wireless applications can share the use of the same antenna and/or circuitry.

The slave device 100 also comprises a controller 224, which is responsible for the overall operation of the slave device 100. The controller 224 can be a central processing unit (CPU), a digital signal processor (DSP), or any other suitable programmable electronic device. A memory 225 comprises at least work memory, such as random access memory (RAM), which could be either volatile or non-volatile. Optionally, non-volatile memory, such as flash memory, magnetic storage, optical storage or any combination of these, also form part of the memory 225. One purpose of the memory 225 is to hold software instructions for the controller 224.

Master communication means 229 is provided, for receiving control signals from the master device 106, and for transmitting and/or receiving analogue signals (e.g. speech) or payload data to/from the master device 106. The master communication means 229 can be adapted for wireless communication, being for example a Bluetooth transceiver, a wireless USB transceiver, or a transceiver for any of the IEEE 802.11 standards. Furthermore, the master communication means 229 can be wire-based, for example using universal serial bus, a serial connection (e.g. RS-232), a parallel connection (e.g. Centronics) or any other suitable local connection. The master communication means 229 can also be any combination of two or more wireless or wire based communication technologies.

Payload data denotes data related to the wireless application in question in a format which is usable for the master device 106. The payload data can for example contain audio or video data (either of these in either analogue or digital format), text data (such as latitude and longitude co-ordinates) or binary data (e.g. when using WIMAX). Where appropriate, the controller 224 converts data received from the wireless application in question to a payload format which is readable for the master device 106, optionally using appropriate circuitry, e.g. A/D converters, D/A converters etc. Optionally, payload data received from the master device 106 can also be converted to a format necessary for transmission using the wireless application in question. It is to be noted that conversion only occurs if appropriate.

A power supply 227, such as a battery, provides power to the slave device 100. The power supply can for example be a rechargeable battery or a replaceable (non-rechargeable or rechargeable) battery.

Optionally, one or more basic user interface components 226 are provided within the slave device 100. For example, a button for power on/power off can be provided, or a button for use when connecting to the master device 106. It is to be noted that even though the slave device 100 may comprise basic user interface 226, the slave device 100 is still mainly controlled by the master device 106. This entails that the master device 106 is responsible for any user interaction related to the wireless application in question and the master device 106 will be the receiver and/or transmitter of the payload data related to the wireless application in question.

Optionally, the slave device 100 also has a subscriber identity module (SIM) card 223 and an associated reader. As is commonly known, the SIM card 223 itself comprises a processor as well as local work and data memory. The SIM card can for example be used when one of the wireless applications is GSM or UMTS. The slave device 100 can comprise several SIM cards 223 and reader, where each card and reader is associated with one wireless application. Alternatively or additionally, one SIM card and reader can be used for a plurality or even all wireless applications.

The slave device 100 can combine both practicality and attractiveness for the user by comprising attachment means, allowing the slave device to attached to, or integrated with the necessities or in the body of the user. The slave device can be provided with means of attachment, such that the device can be attached to the user. This can e.g. be achieved by a belt, stripe or the like, or the slave device can be provided with fastening means interacting with a counter part, such as a belt clip, carried by the user. The slave device 100 can also be integrated with a bracelet, necklace or some other piece of jewellery, or it can be integrated e.g. with a wristwatch, toupee, spectacles, belt buckle, artificial limb or the like. The slave device 100 can also be an implant hidden under the skin of the user by surgical means. The antennas of the slave device 100 may comprise a radiator in the form of a tattoo on the skin of the user made with electrically conductive ink, or the radiator can be brought on the skin of the user by other means such as gluing. Especially in cases where the slave device 100 gets a form of an implant, the charging means of the power source can be wireless. Alternatively or additionally, the power source is charged by current generated from body heat by means of a thermoelectric device, or is charged mechanically from body movements.

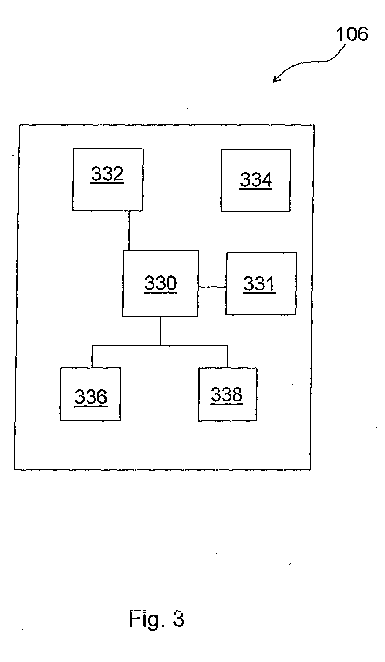

Fig 3 is a schematic illustration of the internal components of the master device 106 of Fig 1. The master device 106 comprises slave communication means 332, which corresponds with the master communication means of the slave device 106. The slave communication means allows the master device 106 to send commands to the slave device 100 and receive and/or send payload data (or analogue signals such as speech) from/to the slave device 100. In one embodiment, the slave communication means 332 is the only wireless communication means of the master device 106.

A controller 330, such as a CPU, a DSP or any other suitable programmable electronic device 330 is responsible for the overall operation of the master device 106.

A memory 331, comprising any one or a combination of RAM, read only memory (ROM), flash memory, magnetic memory, and optical memory, can be used for holding software instructions for the controller 330 and can additionally be used to hold user data appropriate for the master device 106.

The master device 106 is responsible for providing a user interface, comprising an input means 338 and an output means 336.

The input means 338 can for example comprise keys of a keypad or a keyboard, a microphone (optionally used for voice control of the master device 106), or directional input such as a joystick, a joy pad, a track ball. The output means 336 can for example comprise one or more displays, a speaker, headphones, a vibrator, etc.

Through the user interface 336, 338 formed, the user can interact with the master device 106, whereby commands can be sent to the slave device 100, affecting the receiving or transmitting of payload data over the local interface.

A power supply 334, such as a battery, provides power to the master device 106. The power supply 334 can for example be a rechargeable battery or a replaceable (non-rechargeable or rechargeable) battery.

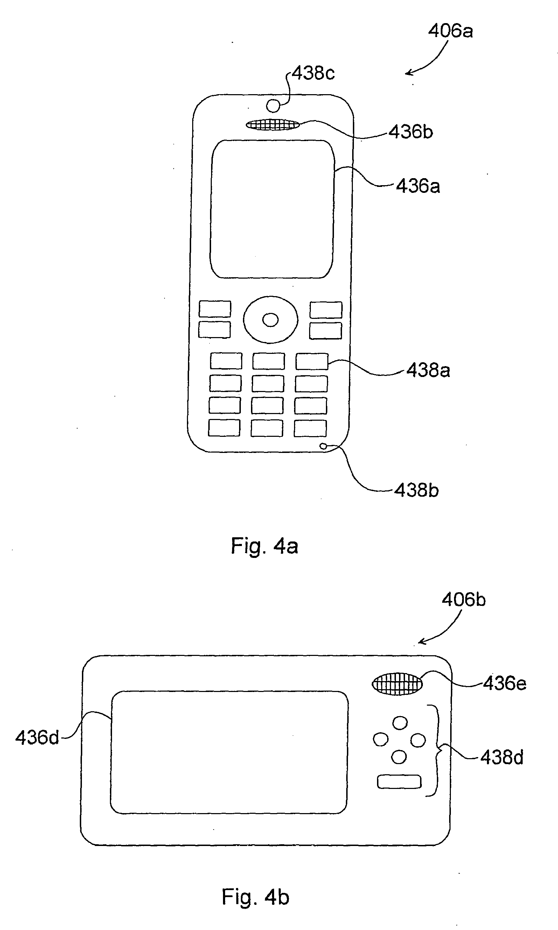

Fig 4a shows the master device 106 of Fig 3 embodied in a phone UI device 406a for use with mobile communication. Although the phone UI device 406a may resemble a conventional mobile terminal, it is significantly simpler than a conventional mobile terminal. The user interface of the phone UI device 406a comprises a keypad 438a, a microphone 438b, camera 438c, a display 436a and a speaker 436b.

Since all circuitry and antennas related to mobile communication are placed in the slave device 100, the phone UI device 406a can be made simpler, lighter, smaller and at lower cost. Furthermore, if the user wishes to exchange the phone UI device 406a, e.g. to acquire a device with a larger display, possibly with touch screen functionality, the user can keep the slave device 100 and only exchange the phone UI device 406a. This provides for excellent upgradeability for the user.

Using the phone UI device 406a as a master device 106 and the slave device 100, it will now be presented an example when the wireless application in question is a video call, with reference to Figs 1-4. Initially, the user initiates a call using the keypad 438a and the display 436a of the phone UI device 406a. Using the slave communication means 332, the phone UI device 406a then sends a command to set up a video call to the slave device 100. The slave device 100 receives the command through the master communication means 229, interprets the command in the controller 224 and uses the appropriate wireless interface 220 to set up the video call. Once the call has been set up, audio and video data is received over the wireless interface 220. The controller 224 of the slave device 100 optionally converts the audio and video to appropriate format and sends this as payload data to the phone UI device 406a using the master communication means 229. The phone UI device 406a receives the video and audio data using the slave communication means 332, presents video data on the display 436a and presents the audio data using the speaker 436b. At the same time, audio data is captured by the phone UI device 406a using the microphone 438b and video data is captured using the camera 438c. The captured video and audio is sent, using the slave communication means 229, to the slave device 100 as payload data. The slave device 100 can thereby forward the captured audio and video data using the wireless interface 220 to the mobile communication network.

Fig 4b shows the master device 106 of Fig 3 embodied in a navigation UI device. The user interface of the navigational UI device 406b comprises a keypad 438d, a display 436d and a speaker 436e. However, the GPS receiver and antenna is comprised in the slave device 100 and is therefore not required in the navigation UI device 406b.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A slave device (100) comprising:
a first wireless communication means (220-222);
master communication means (229), for receiving control signals from a master device (106), and transmitting and receiving payload data to or from said master device (106), said master device (106) being separate from said slave device (100); and
attachment means for attaching, directly or indirectly, said slave device to a person;
wherein said slave device (100) is configured to be controlled mainly using said control signals from said master device (106).

2. The slave device (100) according to claim 1, wherein said slave device (100) is configured to be controlled only using said control signals from said master device (106).

3. The slave device (100) according to any one of the previous claims, wherein said slave device further comprises at least one reader for a subscriber identity module.

4. The slave device (100) according to claim 3, wherein one of said at least one reader for a subscriber identity module is associated with a plurality of wireless communication means.

5. The slave device (100) according to any one of the preceding claims, wherein said attachment means comprises an integration of said slave device with another item.

6. The slave device (100) according to claim 5, wherein said attachment means comprises an integration with an item selected from the group consisting of a bracelet, a necklace, a wristwatch, a toupee, spectacles, a belt buckle, and an artificial limb or any combination of these items.

7. The slave device (100) according to any one of the preceding claims, wherein said attachment means comprises implanting means.

8. The slave device (100) according to any one of the preceding claims, wherein said first wireless communication means (220-222) is configured for communicating with a mobile telecommunication network;
and said slave device further comprises a second wireless communication means (220-222) for receiving signals of a second wireless application, said second wireless communication means being distinct from said first wireless communication means.

9. The slave device (100) according to claim 8, wherein said second wireless application is an application selected from the group consisting of satellite based positioning, frequency modulated radio audio broadcasting, amplitude modulated radio audio broadcasting, digital audio broadcasting, radio based mobile television, satellite based mobile television, wireless local area network, and wireless metropolitan area network, or any combination of these applications.

10. The slave device (100) according to claim 8 or 9, wherein said slave device (100) further comprises a third wireless communication means for receiving signals for a third wireless application.

11. A system comprising:
a slave device (100) and at least one master device (106), said at least one master device (106) being separate from said slave device (100),
wherein said slave device (100) comprises:
a first wireless communication means (220-222);
master communication means (229), for receiving control signals from said at least one master device (106), and transmitting and receiving payload data to or from said at least one master device (106); and
attachment means for attaching, directly or indirectly, said slave device to a person;
and each one of said at least one master device (106) comprises:
slave communication means (332), for sending control signals to said slave device (100) and receiving and transmitting payload data from or to said slave device (100);
user input means (338); and
user output means (336);
wherein said slave device (100) is configured to be controlled mainly using said control signals from said at least one master device (106).

12. The system according to claim 11, wherein said attachment means comprises an integration of said slave device with another item.

13. The system according to claim 11 or 12, wherein said attachment means comprises an integration with an item selected from the group consisting of a bracelet, a necklace, wristwatch, toupee, spectacles, belt buckle, and artificial limb or any combination of these items

14. The system according to claim 11 or 12, wherein said attachment means comprises implanting means.

15. The system according to claim 11 or 14, wherein said slave device (100) is configured to be controlled only using said control signals from said at least one master device (106).

16. The system according to any one of claims 11 to 15, wherein said slave communication means (332) is the only wireless communication means of said master communication means (229).

17. The system according to any one of claims 11 to 16, wherein said slave device further comprises at least one reader for a subscriber identity module.

18. The system according to claim 17, wherein one of said at least one reader for a subscriber identity module is associated with a plurality of wireless communication means.
